(19) Europäisches Patentamt
European Patent Office
Office européen des brevets

(11) **EP 3 864 381 B1**

(12) **EUROPÄISCHE PATENTSCHRIFT**

(45) Veröffentlichungstag und Bekanntmachung des Hinweises auf die Patenterteilung:
**08.11.2023  Patentblatt 2023/45**

(21) Anmeldenummer: **19770082.6**

(22) Anmeldetag: **18.09.2019**

(51) Internationale Patentklassifikation (IPC):
**G01F 23/292** (2006.01)    **G01N 21/41** (2006.01)

(52) Gemeinsame Patentklassifikation (CPC):
**G01F 23/292; G01N 21/4133**

(86) Internationale Anmeldenummer:
**PCT/EP2019/075081**

(87) Internationale Veröffentlichungsnummer:
**WO 2020/074231 (16.04.2020 Gazette 2020/16)**

(54) **OPTISCHE SENSOREINRICHTUNG ZUM MESSEN EINES FÜLLSTANDES UND EINES BRECHUNGSINDEX EINER FLÜSSIGKEIT IN EINEM BEHÄLTER UND VERFAHREN ZUM BETREIBEN EINER OPTISCHEN SENSOREINRICHTUNG ZUM MESSEN EINES FÜLLSTANDES UND EINES BRECHUNGSINDEX EINER FLÜSSIGKEIT IN EINEM BEHÄLTER**

OPTICAL SENSOR DEVICE FOR MEASURING A FILL LEVEL AND A REFRACTIVE INDEX OF A LIQUID IN A CONTAINER, AND METHOD FOR OPERATING AN OPTICAL SENSOR DEVICE FOR MEASURING A FILL LEVEL AND A REFRACTIVE INDEX OF A LIQUID IN A CONTAINER

DISPOSITIF CAPTEUR OPTIQUE POUR MESURER UN NIVEAU DE REMPLISSAGE ET UN INDICE DE RÉFRACTION D'UN LIQUIDE DANS UN RÉCIPIENT ET PROCÉDÉ DE FONCTIONNEMENT D'UN DISPOSITIF CAPTEUR OPTIQUE POUR MESURER UN NIVEAU DE REMPLISSAGE ET UN INDICE DE RÉFRACTION D'UN LIQUIDE DANS UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2018  DE 102018217356**

(43) Veröffentlichungstag der Anmeldung:
**18.08.2021  Patentblatt 2021/33**

(73) Patentinhaber: **Robert Bosch GmbH**
**70442 Stuttgart (DE)**

(72) Erfinder:
• **ROESENER, Benno**
**70193 Stuttgart (DE)**
• **KLEMM, Alexander**
**71277 Rutesheim (DE)**

(56) Entgegenhaltungen:
**EP-A1- 2 770 308        DE-A1-102015 204 675**
**KR-B1- 101 252 396      US-A1- 2018 100 755**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine optische Sensoreinrichtung zum Messen eines Füllstandes und eines Brechungsindex einer Flüssigkeit in einem Behälter und ein Verfahren zum Betreiben einer optischen Sensoreinrichtung zum Messen eines Füllstandes und eines Brechungsindex einer Flüssigkeit in einem Behälter.

Stand der Technik

Zur Ermittlung des Füllstands in einem Tank (z. B. in einem AdBlue-Tank im Kfz) kommen üblicherweise Ultraschallsensoren zum Einsatz. Zur Identifikation von Flüssigkeiten (z. B. zur Verhinderung von Fehlbetankung) wurden bisher unterschiedliche Sensorkonzepte entwickelt, welche etwa auf der Messung von Schallgeschwindigkeit (z. B. im Ultraschallbereich), Wärmeleitfähigkeit, Viskosität, Dichte oder elektrischer Permeabilität basieren. Des Weiteren wird auch versucht, die Zusammensetzung von Betriebs- und Kraftstoffen im Kfz mittels Impedanzspektroskopie im Hochfrequenzbereich zu ermitteln. Unter Verwendung optischer Messverfahren wurden bislang verschiedene Sensoren entwickelt. Beispielsweise ist ein refraktometrischer Sensor bekannt, bei dem die Lichtbrechung an der Grenzfläche zur Flüssigkeit bestimmt wird, um Rückschlüsse auf die Konzentration von Harnstoff-Wasser-Lösungen zu ziehen.

Des Weiteren sind Sensoren bekannt, die auf der wellenlängenabhängigen Absorption von Licht beim Durchstrahlen der Flüssigkeit basieren .

In der EP 1929279 B1 wird eine Vorrichtung zur Bestimmung des Brechungsindex eines Fluids mit einem lichtdurchlässigen Körper, einer lichtemittierenden Einrichtung zur Erzeugung eines Lichtstrahls, einer Detektoranordnung und einem optischen Element, das in dem definierten Lichtweg angeordnet wird, beschrieben.

Eine weitere Vorrichtung zur Bestimmung des Brechungsindex eines Fluids mit einem lichtdurchlässigen Körper, welches teilweise Merkmale der optischen Sensoreinrichtung gemäß Anspruch 1 offenbart, wird in dem Dokument EP 2 770 308 A1 beschrieben.

Offenbarung der Erfindung

Die vorliegende Erfindung schafft eine optische Sensoreinrichtung zum Messen eines Füllstandes und eines Brechungsindex einer Flüssigkeit in einem Behälter nach Anspruch 1 und ein Verfahren zum Betreiben einer optischen Sensoreinrichtung zum Messen eines Füllstandes und eines Brechungsindex einer Flüssigkeit in einem Behälter nach Anspruch 9.

Bevorzugte Weiterbildungen sind Gegenstand der Unteransprüche.

Vorteile der Erfindung

Die der vorliegenden Erfindung zugrunde liegende Idee besteht darin, eine optische Sensoreinrichtung anzugeben, mittels welcher sowohl eine Füllstandsmessung einer Flüssigkeit in einem Behälter (Tank) und auch eine Ermittlung des Brechungsindex dieser Flüssigkeit möglich ist. Der Brechungsindex kann in einem zur Füllstandsmessung separatem optischen Pfad erfolgen, wobei beide Messungen auf einer optischen Länge basieren. Das Prinzip ist anwendbar auf sämtliche Flüssigkeiten, die im betrachteten Wellenlängenbereich transparent sind. Die Bestimmung des Brechungsindex kann einfach und bei minimalem Bauraum des Sensors erfolgen.

Erfindungsgemäß umfasst die optische Sensoreinrichtung zum Messen eines Füllstandes und eines Brechungsindex einer Flüssigkeit in einem Behälter ein Gehäuse, welches an einem Boden oder einer Seitenwand des Behälters montierbar ist; eine Laserlichtquelle, welche in dem Gehäuse angeordnet ist und durch welche ein Laserstrahl erzeugbar ist und in die Flüssigkeit einstrahlbar ist; eine Umlenkeinrichtung für den Laserstrahl, welche im oder am Gehäuse angeordnet ist, und durch welche der Laserstrahl in Richtung eines Flüssigkeitsspiegels in die Flüssigkeit einstrahlbar ist und im Wesentlichen parallel zum Flüssigkeitsspiegel umlenkbar und auf ein Streuelement innerhalb der Flüssigkeit ausrichtbar ist, wobei der Laserstrahl vom Streuelement und von einer Behälterdecke zumindest teilweise in die Laserlichtquelle zurückstrahlbar und in diese einkoppelbar ist, wobei das Streuelement im oder am Gehäuse angeordnet ist und das Gehäuse von der Flüssigkeit zumindest teilweise durchdringbar oder umgebbar ist; ein Fotoelement, welches an oder in der Laserlichtquelle angeordnet ist und durch welches eine Intensität des von der Laserlichtquelle abgestrahlten Laserstrahls erfassbar ist; eine Auswerteeinrichtung zum Ermitteln des Füllstandes und des Brechungsindex, wobei der Füllstand aus einer optischen Weglänge des Laserstrahls zwischen der Laserlichtquelle und einer Behälterdecke ermittelbar ist, wobei die Behälterdecke oberhalb des Flüssigkeitsspiegels angeordnet ist, und der Brechungsindex aus einer optischen Weglänge zwischen der Laserlichtquelle und dem Streuelement ermittelbar ist, und die optische Weglänge jeweils aus einer Variation einer Intensität des von der Laserlichtquelle abgestrahlten Laserstrahls ermittelbar ist; und eine Steuereinrichtung mittels welcher die Laserlichtquelle mit einem Modulationssignal betreibbar ist.

Der Brechungsindex dient vorteilhaft als Indikator für eine korrekte Zusammensetzung der Flüssigkeit. Somit kann etwa eine Fehlbetankung erkannt werden.

Das Messen des Füllstandes und des Brechungsindex kann vorteilhaft zeitlich nacheinander erfolgen. Das Gehäuse kann vorteilhaft als ein Fertigteil in dem Behälter montiert werden, wobei auf eine separate Montage des Streuelementes vorteilhaft verzichtet werden kann und das Gehäuse bereits vorbestimmte Platzvorgaben für den im Behälter durch das Gehäuse einzunehmenden Bereich erfüllbar sein kann.

Die Laserlichtquelle umfasst vorteilhaft eine kantenemittierende Laserdiode mit hoher Seitenmodenunterdrückung im Emissionsspektrum (z. B. DFB-Laser) oder einen oberflächenemittierenden Halbleiterlaser (VCSEL). Das Laserlicht wird nach Austritt aus dem emittierenden Bauteil (Laserlichtquelle) vorteilhaft durch ein geeignetes optisches Element (Linse oder Freiformspiegel) kollimiert. Das am Streuelement und an der Behälterdecke oder auch an anderen Elementen im Behälter (Tank) vorteilhaft diffus gestreute Licht von der Lichtquelle kann in diese Lichtquelle zurück einkoppeln und durch das Konzept der Selbstmischinterferometrie (Self-mixing-interferometry; SMI) eine Variation in der von der Lichtquelle abgestrahlten Intensität bewirken. Eine Auswertung der Rückkopplungseffekte durch die SMI kann vorteilhaft eine Bestimmung der optischen Weglänge innerhalb des Behälters ermöglichen. Zur Bestimmung des Füllstands verläuft der optische Pfad dabei zwischen zwei Punkten, die sich bei unvollständig gefülltem Behälter (Tank) auf unterschiedlichen Seiten des Flüssigkeitsspiegels befinden. Zur Bestimmung des Füllstands wird dann die optische Weglänge bestimmt, die der Laserstrahl nach Durchqueren von Medium, angrenzendem Luftspalt und weiterer Wegstrecken durch Luft oder optische Materialien (z. B. von Fenstern) bis zur diffusen Streuung oder Reflexion an einer gegenüberliegenden Wand (Behälterdecke) zurücklegt.

In erster Linie wird vorteilhaft eine Variation der Lichtintensität betrachtet, um daraus optische Weglängen (mehrere bei einer Überquerung des Flüssigkeitsspiegels und zurück) abzuleiten und von diesen auf den Füllstand oder den Brechungsindex schließen zu können. Die optische Weglänge im leeren Behälter ist vorteilhaft bekannt, und in Anwesenheit einer Flüssigkeit lässt eine Erhöhung der optischen Weglänge bei bekanntem Brechungsindex vorteilhaft Rückschlüsse auf den Füllstand zu. Des Weiteren kann bei einer bekannten geometrischen Weglänge zu den Streuelement(en) bei einer Veränderung der optischen Weglänge auf den Brechungsindex rückgeschlossen werden. Hierbei kann vorteilhaft auf eine optische Weglängendifferenz zwischen zwei Streuelementen rückgegriffen werden. Zur Bestimmung der Variation wird das Laserlicht vorteilhaft moduliert.

Das Fotoelement überwacht vorteilhaft die optische Ausgangsleistung (Intensität) der Laserlichtquelle. Das Fotoelement kann eine Fotodiode umfassen und beispielsweise nah an der Lichtquelle oder innerhalb dieser, etwa im Schichtaufbau des Halbleiterlasers, angeordnet sein und das Licht von der Laserlichtquelle messen. Basierend auf üblichen Analysemethoden der Fluktuation der Ausgangsleistung der Laserlichtquelle mittels der SMI kann auf die (absolute) optische Weglänge zwischen der Lichtquelle und dem bestrahlten Objekt (Behälterdecke oder Streuelement) rückgeschlossen werden. Im Gegensatz zur physikalischen Weglänge wird die optische Weglänge beim Durchqueren eines Mediums um die Brechzahl verlängert.

Das Streuelement kann vorteilhaft an einem Randbereich oder an einer Halterung in einer bekannten Distanz zum Gehäuse oder innerhalb des Gehäuses angeordnet sein. Hierzu kann die Flüssigkeit das Gehäuse zumindest umgeben oder durchdringen, so dass das Streuelement und der optische Pfad bis dorthin vorteilhaft gänzlich innerhalb der Flüssigkeit liegt und die Lichtstrahlen für die Bestimmung des Brechungsindex den Flüssigkeitspegel vorteilhaft nicht überschreiten.

Bezüglich der optischen Pfade zur Behälterdecke (etwa bei unterschiedlichen Winkeln), wird er Brechungsindex vorteilhaft auf einem anderen Pfad ermittelt als der Füllstand.

Der Brechungsindex wird vorteilhaft in einem separaten optischen Pfad bestimmt, welcher stets innerhalb der Flüssigkeit verbleibt. Da sich die geometrische Weglänge durch das Medium im Gegensatz zur Füllstandmessung jedoch nicht in Abhängigkeit vom Füllstand ändert (dort verlässt der Laserstrahl die Flüssigkeit), lässt sich über eine Messung der optischen Weglänge in diesem Pfad vorteilhaft die Brechzahl der Flüssigkeit bestimmen.

Durch das Umlenken an der Umlenkeinrichtung kann der Laserstrahl vorteilhaft zeitlich verändert, vorteilhaft um einen Winkel abgelenkt werden. Auf einer Oberfläche kann der Laserstrahl somit über die Zeit eine Linie beschreiben. Das Umlenken kann zwischen statischen Positionen erfolgen, etwa zwischen unterschiedlichen optischen Pfaden umgeschaltet werden.

Zum Betrieb der Laserlichtquelle wird diese mit einem Modulationssignal angesteuert, etwa einem Strom, wodurch vorteilhaft ein gewünschter Betriebsmodus der Laserlichtquelle erzielt werden kann und der Laserstrahl in seiner Wellenlänge periodisch moduliert werden. Durch die Strommodulation der Laserlichtquelle kann vorteilhaft der Effekt der SMI besser aufgelöst werden und genauer erfolgen, wobei es möglich sein kann die Strommodulation dynamisch an die benötigte Genauigkeit bei der Bestimmung des optischen Pfades anzupassen um eine bessere Auflösung zu erzielen. Da die Flüssigkeit vorteilhaft einen höheren Brechungsindex als Luft aufweist, skaliert die gemessene optische Weglänge vorteilhaft linear mit dem Füllstand der Flüssigkeit.

Der Behälter kann einen Tank umfassen, etwa für Betriebsstoffe im Kfz (z. B. AdBlue-Tank). Eine Bauhöhe kann im Bereich von 100 mm bis 500 mm liegen. Auch die für Füllstandmessungen relevanten Weglängen bewegen sich vorteilhaft in diesem Bereich. Wenn der Laserstrahl die Flüssigkeit durchquert, erhöht sich die optische Weglänge gegenüber der geometrischen Weglänge für diese Teilstrecke um einen Faktor, der durch die Brechzahl gegeben ist. Wenn der Tank beispielsweise 32,5-prozentige Harnstoffwasserlösung beinhaltet, muss der Sensor unter Umständen Weglängen messen, die um einen Faktor 1,38 höher als die tatsächliche Bauhöhe der Tankeinheit sind.

Gemäß einer bevorzugten Ausführungsform der optischen Sensoreinrichtung umfasst die Umlenkeinrichtung einen beweglichen Mikrospiegel.

Gemäß einer bevorzugten Ausführungsform der optischen Sensoreinrichtung umfasst diese ein kollimierendes Element, durch welches der Laserstrahl kollimierbar ist und bei einer Kollimation auf die Behälterdecke oder auf das Streuelement ausrichtbar ist.

Gemäß einer bevorzugten Ausführungsform der optischen Sensoreinrichtung umfasst diese ein fokussierendes Element, durch welches der Laserstrahl fokussierbar ist und bei einer Fokussierung auf das Streuelement ausrichtbar ist.

Der Lichtstrahl kann sowohl bei der Füllstandmessung als auch bei der Brechungsindex-Bestimmung zunächst kollimiert werden. Bei der Brechungsindex-Bestimmung kann nachfolgend der Kollimation noch einmal fokussiert werden.

Die hier beschriebene Sensoreinrichtung ermöglicht es vorteilhaft die Messgenauigkeit bei der Bestimmung der Brechzahl zu erhöhen, wenn aus Platzgründen in diesem Pfad eine Wegstrecke verwendet wird, die deutlich geringer ist als die Weglänge, die bei der Messung des Füllstands durchquert wird. Hierzu kann ein weiteres optisches Element verwendet werden, das eine Fokussierung des Strahls auf das Streuelement im Nahbereich ermöglicht. Zum anderen kann die Lasermodulation gegenüber der Messung des Füllstands angepasst werden, um eine höhere Empfindlichkeit bei der Entfernungsmessung zu erreichen.

Für die bereits genannten Weglängen in der Größenordnung von 0,1 m bis 1 m kann der Laserstrahl kollimiert werden. Der zunächst divergente Strahl der Laserdiode kann dabei durch ein fokussierendes Element oder ein kollmierendes Element so transformiert werden, dass die Strahldivergenz im Bereich von 0.5 - 5 mrad liegt (Vollwinkel). In der Strahltaille kann der Strahldurchmesser dann typischerweise einige 100 $\mu$m betragen.

Gemäß einer bevorzugten Ausführungsform der optischen Sensoreinrichtung ist das fokussierende Element in einer Wand des Gehäuses angeordnet, wobei eine effektive Brennweite des fokussierenden Elements einer Distanz zwischen dem fokussierenden Element und dem Streuelement entspricht.

Gemäß einer bevorzugten Ausführungsform der optischen Sensoreinrichtung umfasst das fokussierende Element eine Linse oder einen gekrümmten Spiegel.

Gemäß einer bevorzugten Ausführungsform der optischen Sensoreinrichtung umfasst diese zwischen der Laserlichtquelle und der Umlenkeinrichtung eine optische Abbildungseinrichtung mit variabler Brennweite.

Es ist weiterhin möglich, dass auf separate Fokussierelemente

in den unterschiedlichen optischen Pfaden verzichtet werden kann. Stattdessen kann

nach der Laserlichtquelle und vor der Umlenkeinrichtung eine Optik zum Einsatz kommen (Abbildungseinrichtung), die beispielsweise eine Linse oder einen gekrümmten Spiegel mit variabler Brennweite umfasst. Wenn über die Umlenkeinrichtung vorteilhaft unterschiedliche optische Pfade ausgewählt werden, kann über die variable Optik dann die Strahltaille auf die gewünschte Objektoberfläche (etwa das Streuelement) gesetzt werden, um eine Distanzmessung mit optimalem Signal-Rausch-Verhältnis zu ermöglichen.

Gemäß einer bevorzugten Ausführungsform der optischen Sensoreinrichtung umfasst diese ein erstes Streuelement und zumindest ein zweites Streuelement, welche von dem umgelenkten Laserstrahl im Wesentlichen parallel zum Flüssigkeitsspiegel bestrahlbar sind und in einer Richtung des im Wesentlichen parallel zum Flüssigkeitsspiegel verlaufenden Laserstrahls versetzt sind.

Erfindungsgemäß erfolgt bei dem Verfahren zum Betreiben einer optischen Sensoreinrichtung zum Messen eines Füllstandes und eines Brechungsindex einer Flüssigkeit in einem Behälter, ein Bereitstellen einer erfindungsgemäßen optischen Sensoreinrichtung; ein Einstrahlen eines Laserstrahls durch eine Laserlichtquelle in die Flüssigkeit, wobei der Laserstrahl in Richtung eines Flüssigkeitsspiegels und/oder auf eine Umlenkeinrichtung gestrahlt wird; ein Erfassen einer Intensität des abgestrahlten Laserstrahls von der Laserlichtquelle durch das Fotoelement; ein Ermitteln einer Variation einer Intensität des von der Laserlichtquelle abgestrahlten Laserstrahls durch das Fotoelement nach einem Einkoppeln des an der Behälterdecke oder am Streuelement gestreuten Laserstrahls in die Lichtquelle; ein Ermitteln einer optischen Weglänge des Laserstrahls zwischen der Laserlichtquelle und einer Behälterdecke, wobei die Behälterdecke oberhalb des Flüssigkeitsspiegels angeordnet ist, und zwischen der Laserlichtquelle und dem Streuelement aus der Variation der Intensität; und ein Ermitteln des Füllstandes aus der optischen Weglänge des Laserstrahls zwischen der Laserlichtquelle und der Behälterdecke und Ermitteln des Brechungsindex aus der optischen Weglänge zwischen der Laserlichtquelle und dem Streuelement durch die Auswerteeinrichtung.

Gemäß einer bevorzugten Ausführungsform des Verfahrens wird mit der Umlenkeinrichtung ein Umlenkwinkel für den Laserstrahl variiert und der Laserstrahl auf die Behälterdecke oder auf das Streuelement gelenkt.

Gemäß einer bevorzugten Ausführungsform des Verfahrens erfolgt ein Betreiben der Laserlichtquelle mit einem Modulationssignal durch die Steuereinrichtung, wobei beim Bestrahlen des Flüssigkeitsspiegels ein erstes Modulationssignal und beim Bestrahlen des Streuelements ein zweites Modulationssignal verwendet wird.

Gemäß einer bevorzugten Ausführungsform des Verfahrens umfassen das erste Modulationssignal und das zweite Modulationssignal einen Strom in Dreiecksmodulation, wobei das zweite Modulationssignal einen größeren Signalhub umfasst als das erste Modulationssignal.

Gemäß einer bevorzugten Ausführungsform des Verfahrens werden ein erstes Streuelement und zumindest ein zweites Streuelement vom Umlenkelement mit dem Laserstrahl bestrahlt, welche in einer Richtung des im Wesentlichen parallel zum Flüssigkeitsspiegel verlaufenden Laserstrahls versetzt sind, wobei aus den optischen Weglängen zwischen der Lichtquelle und jeweils dem Streuelement eine Verifizierung der ermittelten Brechzahl erfolgt.

Um die Genauigkeit der Messung auf kurzen Distanzen zu verbessern, kann des Weiteren die Modulation der Laserlichtquelle angepasst werden.

In der Umsetzung der Weglängenmessung über SMI, kann der Strom durch die Laserlichtquelle durch eine periodische Aneinanderreihung von Dreiecksignalen moduliert werden. In einer aufsteigenden Stromrampe können in Anwesenheit eines Objekts (Streuelement, Behälterdecke), das Rückstreuungen des ausgesandten Lichts in den Laser hervorrufen kann, periodische Intensitätsmodulationen des Lasers hervorgerufen werden. Bei einem linearen Anstieg des Laserstroms kann eine näherungsweise sinusförmige Modulation der Laserausgangsleistung mit einer gewissen Frequenz f hervorgerufen werden . Im Falle eines ruhenden Objekts ist diese Frequenz f gemäß der Gleichung $f = (d_{opt}/\lambda^2) \cdot \Delta I/\Delta t \cdot d\lambda/dI$ proportional zur optischen Weglänge $d_{opt}$ bis zur Objektoberfläche, wobei, $\Delta I$ dem Anstieg/Abfall des Stroms im Zeitintervall $\Delta t$ entspricht und, $d\lambda/dI$ der Durchstimmkoeffizient des Lasers ist. Ein Sensor, der diese Modulationsfrequenz ausgibt, kann daher bei geeigneter Kalibration zur Entfernungsmessung verwendet werden. Bei der Bestimmung der Modulationsfrequenz durch eine im Sensor integrierte Signalverarbeitung, etwa in der Steuereinrichtung oder Auswerteeinheit, ist die Bandbreite typischerweise begrenzt. Wenn vorteilhaft die Frequenz als Digitalwert ausgegeben wird, ist zudem die Messwertauflösung begrenzt. Entsprechend ist es vorteilhaft, wenn die Strommodulation in der obigen Gleichung so gewählt wird, dass die Frequenz der Intensitätsmodulation durch die Signalverarbeitung optimal aufgelöst wird. Hierbei kann für die Bestimmung der Brechzahl die Amplitude der Strommodulation deutlich erhöht werden (vorzugsweise um einen Faktor 5-10 gegenüber der Füllstandmessung). In einer bevorzugten Umsetzung dieses Prinzips kann die Steuereinrichtung, etwa ein Mikrocontroller, ein FPGA (Field Programmable Gate Array) oder ASIC (Application Specific Integrated Circuit), dabei erwirken, dass die Umlenkeinrichtung einen Winkelbereich ansteuert, innerhalb dessen der Laserstrahl in den optischen Pfad zur Füllstandmessung geführt wird. Simultan zu dieser Ablenkung erzeugt die Steuereinrichtung vorteilhaft ein Steuersignal, das an einen integrierten oder einen als separates Bauteil vorhandenen Lasertreiber gesandt werden kann. Für die Füllstandmessung kann der Lasertreiber daraufhin einen konstanten Strom erzeugen, dem eine Dreiecksmodulation mit einer Peak-to-Peak-Differenz $\Delta I_1$ (Signalhub des ersten Modulsationssignals) überlagert sein kann. Mit dieser Modulation kann die Signalverarbeitung (Auswerteeinheit) die durch den SMI-Effekt in Anwesenheit eines Objekts entstehenden Intensitätsmodulationen des Lasers, die durch die Fotodiode aufgenommen werden, zeitlich (und im Zuge einer nachfolgend möglichen Fouriertransformation des Zeitsignals auch im Frequenzraum) optimal auflösen.

Nach einer ausreichend langen Messzeit, innerhalb derer das Fotodiodensignal von der Steuereinrichtung oder Auswerteeinheit ausgewertet werden kann, kann die Steuereinrichtung anschließend bewirken, das die Umlenkeinrichtung den Winkel für die Adressierung des optischen Pfads zur Bestimmung der Brechzahl einstellt. Gleichzeitig kann nun ein anderes Steuersignal an den Lasertreiber ausgegeben werden, dass diesen nun veranlasst einen Strom einzustellen, der bei näherungsweise unverändertem konstanten Stromanteil (DC-Offset) eine Dreieckmodulation (im zweiten Modulationssignal) mit einer deutlich höheren Peak-to-Peak-Differenz $\Delta I_2 > \Delta I_1$, aufweisen kann, wobei $\Delta I_2$ dem Signalhub des zweiten Modulationssignals entspricht. Im Idealfall entspricht das Verhältnis beider Werte für den Modulationshub dem umgekehrten Verhältnis aus beiden Pfadlängen, d. h. $\Delta I_1/\Delta I_2 \approx d_{Brechzahl}/d_{Füllstand}$.

In dieser Formel bezeichnet $d_{Brechzahl}$ die optische Weglänge im Pfad zur Bestimmung der Brechzahl und $d_{Füllstand}$ die optische Weglänge im Pfad zur Bestimmung des Füllstands.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:

Fig. 1   eine schematische Darstellung der optischen Sensoreinrichtung gemäß eines Ausführungsbeispiels der vorliegenden Erfindung;

Fig. 2   eine schematische Darstellung der optischen Sensoreinrichtung gemäß eines weiteren Ausführungsbeispiels der vorliegenden Erfindung;

Fig. 3   eine schematische Darstellung der optischen Sensoreinrichtung gemäß eines weiteren Ausführungsbeispiels der vorliegenden Erfindung;

und

Fig. 4    eine Abfolge von Verfahrensschritten gemäß eines Ausführungsbeispiels der vorliegenden Erfindung.

In den Figuren bezeichnen gleiche Bezugszeichen gleiche bzw. funktionsgleiche Elemente.

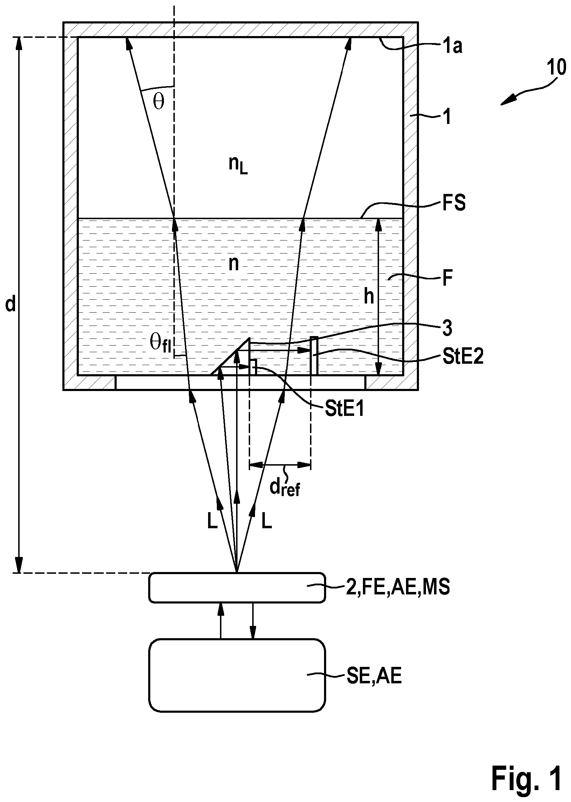

Fig. 1 zeigt eine schematische Darstellung der optischen Sensoreinrichtung gemäß eines Ausführungsbeispiels der vorliegenden Erfindung.

Die optische Sensoreinrichtung 10 zum Messen eines Füllstandes h und eines Brechungsindex n einer Flüssigkeit F in einem Behälter 1 umfasst ein Gehäuse (nicht gezeigt), welches an einem Boden oder einer Seitenwand des Behälters 1 montierbar ist; eine Laserlichtquelle 2, welche in dem Gehäuse angeordnet ist und durch welche ein Laserstrahl L erzeugbar ist und in die Flüssigkeit F einstrahlbar ist. Des Weiteren umfasst die Sensoreinrichtung 10 eine Umlenkeinrichtung 3 für den Laserstrahl L, welche im oder am Gehäuse angeordnet ist, und durch welche der Laserstrahl L in Richtung eines Flüssigkeitsspiegels FS in die Flüssigkeit F einstrahlbar ist und im Wesentlichen parallel zum Flüssigkeitsspiegel FS umlenkbar und auf ein Streuelement StE innerhalb der Flüssigkeit F ausrichtbar ist, wobei der Laserstrahl L vom Streuelement StE und von einer Behälterdecke 1a zumindest teilweise in die Laserlichtquelle 2 zurückstrahlbar und in diese einkoppelbar ist, wobei das Streuelement StE im oder am Gehäuse angeordnet ist und das Gehäuse G von der Flüssigkeit F zumindest teilweise durchdringbar oder umgebbar ist. Die Sensoreinrichtung 10 umfasst ein Fotoelement FE, welches an oder in der Laserlichtquelle 2 angeordnet ist und durch welches eine Intensität des von der Laserlichtquelle 2 abgestrahlten Laserstrahls L erfassbar ist; eine Auswerteeinrichtung AE zum Ermitteln des Füllstandes h und des Brechungsindex n, wobei der Füllstand h aus einer optischen Weglänge dopt des Laserstrahls L zwischen der Laserlichtquelle 2 und einer Behälterdecke 1a ermittelbar ist, wobei die Behälterdecke 1a oberhalb des Flüssigkeitsspiegels FS angeordnet ist, und der Brechungsindex n aus einer optischen Weglänge dopt zwischen der Laserlichtquelle 2 und dem Streuelement StE ermittelbar ist, und die optische Weglänge jeweils aus einer Variation einer Intensität des von der Laserlichtquelle 2 abgestrahlten Laserstrahls L ermittelbar ist; und eine Steuereinrichtung SE mittels welcher die Laserlichtquelle 2 mit einem Modulationssignal betreibbar ist.

Das Streuelement umfasst vorteilhaft ein erstes Streuelement StE1 und ein zweites Streuelement StE2, welche von dem umgelenkten Laserstrahl im Wesentlichen parallel zum Flüssigkeitsspiegel bestrahlbar sind und in einer Richtung des im Wesentlichen parallel zum Flüssigkeitsspiegel verlaufenden Laserstrahls L versetzt sind. Des Weiteren ist es auch möglich, dass das erste Streuelement StE1 und das zweite Streuelement StE2 jeweils Teil des Behälters sein können. In dem Ausführungsbeispiel der Fig. 1 können vorteilhaft nacheinander eine Behälterdecke 1a und die Streuelemente StE1 und StE2 angestrahlt werden. Die Bestrahlung der Behälterdecke kann auch unter einem Winkel θ erfolgen, da eine diffuse Rückstreuung trotzdem in den die Laserlichtquelle 2 einkoppelbar ist. Der gesamte optische Weg dopt zur Behälterdecke berücksichtigt vorteilhaft die Brechzahl der Flüssigkeit und die Brechzahl der Luft nL. Hierbei kann sich ein gesamter optischer Weg aus der Gesamtdistanz d zwischen Behälterdecke und Laserlichtquelle näherungsweise wie folgt ergeben:

$$d_{\text{opt}} = n_L \frac{d - h}{\cos \theta} + n \frac{h}{\sqrt{1 - \frac{n_L^2 \sin^2 \theta}{n^2}}}.$$

Die Umlenkeinrichtung 3 kann ein Prisma und/oder einen Spiegel umfassen. Durch das Umlenkelement kann sichergestellt werden, dass in kurzer zeitlicher Abfolge nacheinander alle involvierten optischen Pfade adressiert werden können.

Zwischen den beiden Streuelementen StE1 und StE2 und/oder zwischen StE1 und der Seitenwand des Behälters 1 kann eine Differenzbildung im optischen Pfad dref berücksichtigt werden, welche die optische Weglänge des Teilstücks des Lichtpfads bestimmt, das sich innerhalb der Flüssigkeit F befindet, mittels welchem eine Bestimmung des Brechungsindex n verifizierbar sein kann. Die Sensoreinrichtung kann ebenfalls einen Mikrospiegel MS, welcher der Laserlichtquelle 2 unmittelbar nachgelagert ist. Die zwei streuenden Oberflächen der StE1 und StE2 können verwendet werden, welche sich vorteilhaft in Strahlrichtung leicht versetzt zu einander innerhalb der Flüssigkeit befinden. Wenn nun die optischen Weglängen zwischen Sensor und jeder der beiden Streuflächen bestimmt werden, kann über die Wegdifferenz dref aus den Messwerten direkt die optische Weglänge des Teilstücks des Lichtpfads bestimmt werden, das sich innerhalb der Flüssigkeit befindet.

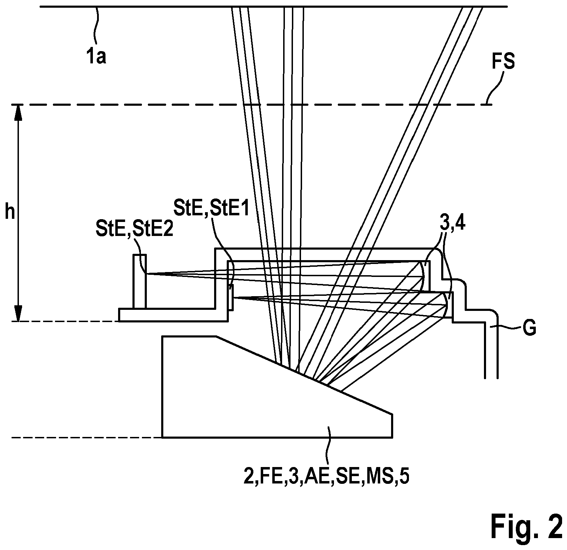

Fig. 2 zeigt eine schematische Darstellung der optischen Sensoreinrichtung gemäß eines weiteren Ausführungsbeispiels der vorliegenden Erfindung.

Zur Bestimmung der Brechzahl n wird vorzugsweise auf einen optischen Pfad mit definierter Länge zurückgegriffen, beispielsweise sind die Distanzen zu den Streuelemten StE1 und StE2 bekannt, da diese fix an bekannter Position am Gehäuse G, im Gehäuse G oder an einer Halterung neben dem Gehäuse G aber mit diesem vorteilhaft verbunden (einstückig ausführbar) sein können. Um hierbei unabhängig von der konkreten Ausgestaltung des Behälters zu werden, ist es vorteilhaft, wenn der optische Pfad zur Bestimmung des Brechungsindex n bereits als Teil der Sensoreinrichtung 10 realisiert wird. Da für die Sensoreinheit in der Regel nur ein begrenzter Bauraum vorgesehen ist, kann sich auch der optische Pfad zur Bestimmung des Brechungsindex n nur über eine geringe Länge erstrecken. Denkbar sind hier maximale Längen von wenigen cm. Dieser Pfad ist somit signifikant (etwa um einen Faktor 10-100) kürzer als der optische Pfad zur Füllstandmessung.

Die Laserlichtquelle 2 ist in der Fig. 2 schematisch als eine Box dargestellt, in welcher auch der Mikrospiegel MS, die Steuereinheit SE zum Ansteuern der Laserlichtquelle mit einem ersten und zweiten Modulationssignal M1 und M2, und der Auswerteeinheit AE enthalten sein können. Das fokussierende Element 4 kann ein Teil der Umlenkeinrichtung sein.

Als eine Alternative können gekrümmte Spiegel als fokussierende Elemente 4 zur Strahlfokussierung verwendet werden. Bei der in Fig. 2 dargestellten Anordnung kann sich jeweils einer dieser Spiegel 4 auf der Innenseite der oberen Gehäuseschale des Gehäuses G für die Bestrahlung eines der Streuelemente am Gehäuse G befinden und von dem Mikrospiegel MS angestrahlt werden, vorteilhaft zeitlich nacheinander.

Wenn der zunächst vorteilhaft kollimierte Laserstrahl durch die Umlenkeinrichtung 4 (Mikrospiegel) in Richtung des genannten gekrümmten Spiegels gelenkt wird, wird der Strahl anschließend in die Richtung der Streuelemente umgelenkt und gleichzeitig in unmittelbarer Umgebung dieser Oberfläche fokussiert (durch den Spiegel 4). Die obere Gehäuseschale ist vorteilhaft transparent und kann einen Durchtritt des fokussierten Strahls in die Flüssigkeit ermöglichen. Der genannte gekrümmte Spiegel weist vorteilhaft eine asphärische Oberflächenform auf. Denkbar ist beispielsweise eine Ausführung als Offset-Parabolspiegel. Die effektive Brennweite des Spiegels 4 kann näherungsweise der optischen Pfadlänge zwischen dem Spiegel und dem jeweiligen Streuelement entsprechen.

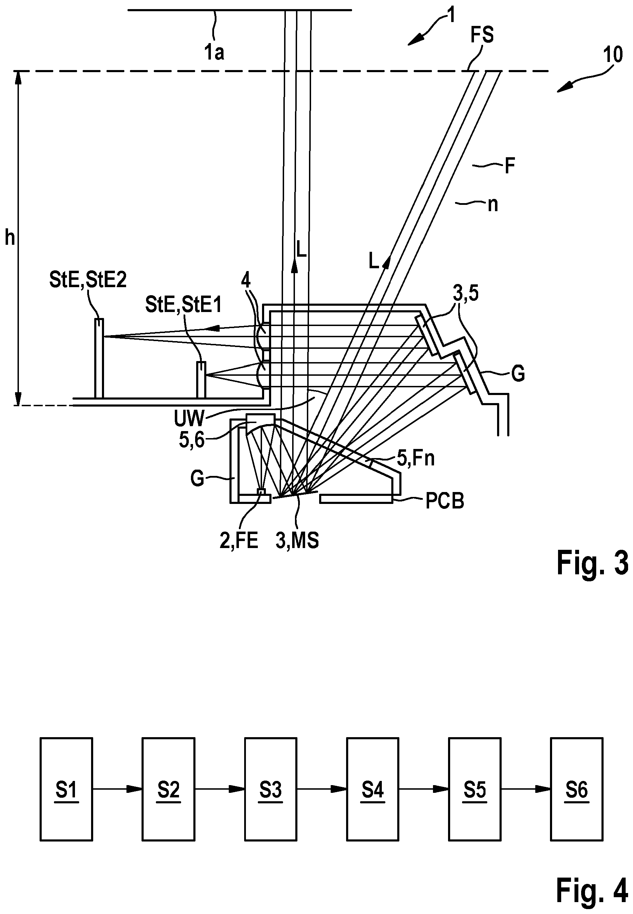

Fig. 3 zeigt eine schematische Darstellung der optischen Sensoreinrichtung gemäß eines weiteren Ausführungsbeispiels der vorliegenden Erfindung.

Ein fokussierendes Element 4 sorgt vorteilhaft dafür, dass ein Fokus im Nahbereich entsteht. Zum anderen kann die Strommodulation des Lasers dynamisch angepasst werden, um bei Messungen im optischen Pfad zur Bestimmung der Brechzahl eine bessere Auflösung der Messwerte zu erreichen. Das erste und das zweite Streuelement StE1 und StE2 sind vorteilhaft an vorbestimmten Positionen in der Flüssigkeit und beispielsweise außerhalb des Gehäuses G angeordnet, folglich kann eine optische Weglänge genau bestimmt werden. Es ist dabei auch möglich, dass das erste Streuelement StE1 innerhalb des Gehäuses G angeordnet ist, etwa in der Wand des Gehäuses, und das zweite Streuelement StE2 außerhalb des Gehäuses, jedoch beide innerhalb der Flüssigkeit F. Durch das fokussierende Element 4 kann eine Fokussierung des Laserstrahls L auf die Streuelemente erfolgen. Für jedes Streuelement können als fokussierendes Element 4 vorteilhaft Linsen mit positiver Brennweite genutzt werden, die typischerweise in die obere Gehäuseschale des Sensors integriert sind. Die effektive Brennweite des fokussierenden Elements 4 kann näherungsweise der optischen Pfadlänge zwischen der Linse und der streuenden Oberfläche des Streuelements innerhalb der Flüssigkeit entsprechen. Eine obere Gehäuseschale des Gehäuses G, die vorteilhaft die Linsen beinhalten kann, kann aus einem transparenten Kunststoff hergestellt sein. Im Umfeld aggressiver Medien kommt hier beispielsweise Polysulfon oder auch COC (Cycloolefin-Copolymere) zum Einsatz. Die genannten Linsen können dann bei einer Herstellung der Gehäuseschale im Spritzgussverfahren direkt abgeformt werden. Die hierbei beschriebenen fokussierenden Elemente 4 kommen vorteilhaft dann zum Einsatz, wenn die Länge dieses Pfads zur Ermittlung des Brechungsindex im Vergleich zur Füllstandmessung um einen Faktor 10 kleiner ist, da das Fokussieren eine höhere Messgenauigkeit ermöglichen kann als jene, die in dem Fall erreicht wird, wenn bei Bestrahlung von StE1 und StE2 ein Strahl verwendet wird, der entsprechend den Anforderungen der Füllstandsmessung (Strahltaille liegt hierbei vorzugsweise in einer Entfernung von 100 - 500 mm, z. B. bei 300 mm) kollimiert wurde.

Nach der Laserlichtquelle 2 und vor der Umlenkeinrichtung 3 kann eine optische Abbildungseinrichtung 6 angeordnet sein, die beispielsweise eine Linse oder einen gekrümmten Spiegel mit variabler Brennweite umfasst. Wenn über die Umlenkeinrichtung 3 vorteilhaft unterschiedliche optische Pfade ausgewählt werden, kann über die Abbildungseinrichtung 6 dann die Strahltaille auf die gewünschte Objektoberfläche (etwa das Streuelement) gesetzt werden, um eine Distanzmessung mit optimalem Signal-Rausch-Verhältnis zu ermöglichen. Die Umlenkeinrichtung 3 kann vorteilhaft den Umlenkwinkel UW variieren. In der oberen Gehäuseschale kann zum Bestrahlen der Linsen 4 auf einer Innenseite jeweils für jede Linse eine weitere Umlenkeinrichtung 3 mit oder ohne ein kollimierendes Element 5 angeordnet sein. Der Boden des Gehäuses G befindet sich vorteilhaft auf dem Boden des Behälters 1, wobei die innere Distanz im Gehäuse zwischen der Laserlichtquelle 2 und dem Strahlaustritt in die Flüssigkeit gegenüber dem Füllstand h vorteilhaft vernachlässigbar sein kann, und der optische Pfad zwischen dem Strahlaustritt aus dem Gehäuse G und dem Streuelement oder der Behälterdecke zur Berücksichtigung ausreichen kann.

Entfernungsmessungen auf Objektoberflächen (Behälterdecke), die im Bereich der Taille des Laserstrahls liegen können, liefern typischerweise ein höheres Signal-Rausch-Verhältnis. In diesem Fall kann das Licht auf dem Rückpfad optimal in die Laserlichtquelle eingekoppelt werden und kann dann in stärkerem Maße zu den gewünschten Rückkopplungseffekten beitragen. Sinnvollerweise kann daher das kollimierende Element 5 nach der Laserlichtquelle 2 dergestalt ausgelegt und positioniert sein, dass die Strahltaille nach der Strahltransformation im Bereich der Behälterdecke 1a liegt (z. B. im Abstand 300 mm zum Sensor).

Zur Bestimmung der Brechzahl n können bevorzugt zwei unterschiedliche optische Pfade zum Einsatz kommen. Aus den optischen Weglängen zwischen der Lichtquelle 2 und jeder der beiden Streuelemente StE1 und StE2, kann über eine Differenzbildung aus den Messwerten der optischen Wege direkt die optische Weglänge des Teilstücks des Lichtpfads bestimmt werden, das sich innerhalb der Flüssigkeit F befindet. Hierdurch

können systematische Messfehler vermieden werden, die z. B. durch Lagetoleranzen der Bauteile oder aber durch Lageänderungen im Betrieb (z. B. durch thermische Verformungen) entstehen. Wenn der Laserstrahl zwischen Quelle und Streuelement StE1 keine Flüssigkeit durchstrahlt, kann zudem über die optische Weglänge, die in diesem Pfad gemessen wird, die Messempfindlichkeit bei der Entfernungsmessung kontinuierlich bestimmt werden. Wenn zwei unterschiedliche optische Pfade zur Bestimmung der Brechzahl zum Einsatz kommen, liegt es nahe auch zwei fokussierende Elemente 4 zu verwenden.

Fig. 4 zeigt eine Abfolge von Verfahrensschritten gemäß einesAusführungsbeispiels der vorliegenden Erfindung.

Bei dem Verfahren zum Betreiben einer optischen Sensoreinrichtung zum Messen eines Füllstandes und eines Brechungsindex einer Flüssigkeit in einem Behälter erfolgt ein Bereitstellen S1 einer erfindungsgemäßen optischen Sensoreinrichtung; ein Einstrahlen S2 eines Laserstrahls durch eine Laserlichtquelle in die Flüssigkeit, wobei der Laserstrahl in Richtung eines Flüssigkeitsspiegels und/oder auf eine Umlenkeinrichtung gestrahlt wird; ein Erfassen S3 einer Intensität des abgestrahlten Laserstrahls von der Laserlichtquelle durch das Fotoelement; ein Ermitteln S4 einer Variation einer Intensität des von der Laserlichtquelle abgestrahlten Laserstrahls durch das Fotoelement nach einem Einkoppeln des an der Behälterdecke oder am Streuelement gestreuten Laserstrahls in die Lichtquelle; ein Ermitteln S5 einer optischen Weglänge des Laserstrahls zwischen der Laserlichtquelle und einer Behälterdecke, wobei die Behälterdecke oberhalb des Flüssigkeitsspiegels angeordnet ist, und zwischen der Laserlichtquelle und dem Streuelement aus der Variation der Intensität; und ein Ermitteln (S6) des Füllstandes aus der optischen Weglänge des Laserstrahls (L) zwischen der Laserlichtquelle (2) und der Behälterdecke (1a) und Ermitteln des Brechungsindex (n) aus der optischen Weglänge zwischen der Laserlichtquelle (2) und dem Streuelement (StE) durch die Auswerteeinrichtung.

**Patentansprüche**

1. Optische Sensoreinrichtung (10) zum Messen eines Füllstandes (h) und eines Brechungsindex (n) einer Flüssigkeit (F) in einem Behälter (1) umfassend;

     - ein Gehäuse (G), welches an einem Boden oder einer Seitenwand des Behälters (1) montierbar ist;
- eine Laserlichtquelle (2), welche in dem Gehäuse (G) angeordnet ist und durch welche ein Laserstrahl (L) erzeugbar ist und in die Flüssigkeit (F) einstrahlbar ist;
- eine Umlenkeinrichtung (3) für den Laserstrahl (L), welche im oder am Gehäuse (G) angeordnet ist, und durch welche der Laserstrahl (L) in Richtung eines Flüssigkeitsspiegels (FS) in die Flüssigkeit (F) einstrahlbar ist und im Wesentlichen parallel zum Flüssigkeitsspiegel (FS) umlenkbar und auf ein Streuelement (StE) innerhalb der Flüssigkeit (F) ausrichtbar ist, wobei der Laserstrahl (L) vom Streuelement (StE) und von einer Behälterdecke (1a) zumindest teilweise in die Laserlichtquelle (2) zurückstrahlbar und in diese einkoppelbar ist, wobei das Streuelement (StE) im oder am Gehäuse (G) angeordnet ist und das Gehäuse (G) von der Flüssigkeit (F) zumindest teilweise durchdringbar oder umgebbar ist;
- ein Fotoelement (FE), welches an oder in der Laserlichtquelle (2) angeordnet ist und durch welches eine Intensität des von der Laserlichtquelle (2) abgestrahlten Laserstrahls (L) erfassbar ist;
- eine Auswerteeinrichtung (AE) zum Ermitteln des Füllstandes (h) und des Brechungsindex (n) , wobei der Füllstand (h) aus einer optischen Weglänge des Laserstrahls (L) zwischen der Laserlichtquelle (2) und einer Behälterdecke (1a) ermittelbar ist, wobei die Behälterdecke (1a) oberhalb des Flüssigkeitsspiegels (FS) angeordnet ist, und der Brechungsindex (n) aus einer optischen Weglänge zwischen der Laserlichtquelle (2) und dem Streuelement (StE) ermittelbar ist, und die optische Weglänge jeweils aus einer Variation einer Intensität des von der Laserlichtquelle (2) abgestrahlten Laserstrahls (L) ermittelbar ist; und
- eine Steuereinrichtung (SE) mittels welcher die Laserlichtquelle (2) mit einem Modulationssignal betreibbar ist.

2. Optische Sensoreinrichtung (10) nach Anspruch 1, bei welcher die Umlenkeinrichtung (3) einen beweglichen Mikrospiegel (MS) umfasst.

3. Optische Sensoreinrichtung (10) nach Anspruch 1 oder 2, welche ein kollimierendes Element (5) umfasst, durch welches der Laserstrahl (L) kollimierbar ist und bei einer Kollimation auf die Behälterdecke (1a) oder auf das Streuelement (StE) ausrichtbar ist.

4. Optische Sensoreinrichtung (10) nach Anspruch 3, welche ein fokussierendes Element (4) umfasst, durch welches der Laserstrahl (L) fokussierbar ist und bei einer Fokussierung auf das Streuelement (StE) ausrichtbar ist.

5.  Optische Sensoreinrichtung (10) nach Anspruch 4, bei welcher das fokussierende Element (4) in einer Wand des Gehäuses (G) angeordnet ist, wobei eine effektive Brennweite des fokussierenden Elements (4) einer Distanz zwischen dem fokussierenden Element (4) und dem Streuelement (StE) entspricht.

6.  Optische Sensoreinrichtung (10) nach einem der Ansprüche 4 oder 5, wobei das fokussierende Element (4) eine Linse oder einen gekrümmten Spiegel umfasst.

7.  Optische Sensoreinrichtung (10) nach einem der Ansprüche 1 bis 6, welche zwischen der Laserlichtquelle (2) und der Umlenkeinrichtung (3) eine optische Abbildungseinrichtung (6) mit variabler Brennweite umfasst.

8.  Optische Sensoreinrichtung (10) nach einem der Ansprüche 1 bis 7, bei welcher das Streuelement (StE) ein erstes Streuelement (StE1) und zumindest ein zweites Streuelement (StE2) umfasst, welche von dem umgelenkten Laserstrahl (L) im Wesentlichen parallel zum Flüssigkeitsspiegel (FS) bestrahlbar sind und in einer Richtung des im Wesentlichen parallel zum Flüssigkeitsspiegel (FS) verlaufenden Laserstrahls (L) versetzt sind.

9.  Verfahren zum Betreiben einer optischen Sensoreinrichtung (10) zum Messen eines Füllstandes (h) und eines Brechungsindex (n) einer Flüssigkeit (F) in einem Behälter (1) umfassend die Schritte:

    - Bereitstellen (S1) einer optischen Sensoreinrichtung (10) nach einem der Ansprüche 1 bis 8;
    - Einstrahlen (S2) eines Laserstrahls (L) durch eine Laserlichtquelle (2) in die Flüssigkeit (F), wobei der Laserstrahl (L) in Richtung eines Flüssigkeitsspiegels (FS) und auf eine Umlenkeinrichtung (3) gestrahlt wird;
    - Erfassen (S3) einer Intensität des abgestrahlten Laserstrahls (L) von der Laserlichtquelle durch das Fotoelement (FE);
    - Ermitteln (S4) einer Variation einer Intensität des von der Laserlichtquelle (2) abgestrahlten Laserstrahls (L) durch das Fotoelement (FE) nach einem Einkoppeln des an der Behälterdecke (1a) oder am Streuelement (StE) gestreuten Laserstrahls (L) in die Lichtquelle (2);
    - Ermitteln (S5) einer optischen Weglänge des Laserstrahls (L) zwischen der Laserlichtquelle (2) und einer Behälterdecke (1a), wobei die Behälterdecke (1a) oberhalb des Flüssigkeitsspiegels (FS) angeordnet ist, und zwischen der Laserlichtquelle (2) und dem Streuelement (StE) aus der Variation der Intensität; und
    - Ermitteln (S6) des Füllstandes aus der optischen Weglänge des Laserstrahls (L) zwischen der Laserlichtquelle (2) und der Behälterdecke (1a) und Ermitteln des Brechungsindex (n) aus der optischen Weglänge zwischen der Laserlichtquelle (2) und dem Streuelement (StE) durch die Auswerteeinrichtung (AE).

10. Verfahren nach Anspruch 9, bei dem mit der Umlenkeinrichtung (3) ein Umlenkwinkel (UW) für den Laserstrahl (L) variiert wird und der Laserstrahl (L) auf die Behälterdecke (1a) oder auf das Streuelement (StE) gelenkt wird.

11. Verfahren nach einem der Ansprüche 9 oder 10, bei dem ein Betreiben der Laserlichtquelle (2) mit einem Modulationssignal durch die Steuereinrichtung (SE) erfolgt, wobei beim Bestrahlen des Flüssigkeitsspiegels (FS) ein erstes Modulationssignal (M1) und beim Bestrahlen des Streuelements (StE) ein zweites Modulationssignal (M2) verwendet wird.

12. Verfahren nach Anspruch 11, bei welchem das erste Modulationssignal (M1) und das zweite Modulationssignal (M2) einen Strom in Dreiecksmodulation umfassen, wobei das zweite Modulationssignal (M2) einen größeren Signalhub umfasst als das erste Modulationssignal (M1).

13. Verfahren nach einem der Ansprüche 9 bis 12, bei welchem ein erstes Streuelement (StE1) und zumindest ein zweites Streuelement (StE2) vom Umlenkelement (3) mit dem Laserstrahl (L) bestrahlt werden, welche in einer Richtung des im Wesentlichen parallel zum Flüssigkeitsspiegel (FS) verlaufenden Laserstrahls (L) versetzt sind, wobei aus den optischen Weglängen zwischen der Lichtquelle (2) und jeweils dem Streuelement (StE1 ; StE2) eine Verifizierung der ermittelten Brechzahl erfolgt.

**Claims**

1.  Optical sensor device (10) for measuring a filling height (h) and a refractive index (n) of a liquid (F) in a container (1), comprising;

    - a housing (G), which is mountable on a bottom or a side wall of the container (1);
    - a laser light source (2), which is arranged in the housing (G) and with which a laser beam (L) can be generated and radiated into the liquid (F);
    - a deflection device (3) for the laser beam (L), which is arranged in or on the housing (G) and with which the laser beam (L) can be radiated in the direction of a liquid level (FS) into the liquid (F) and can be deflected substantially parallel to the liquid level (FS) and can be directed at a scatter element (StE) within the liquid (F), wherein the laser beam (L) can be reflected by the scatter element (StE) and by a container top (1a) at least in part back into the laser light source (2) and be coupled into it, wherein the scatter element (StE) is arranged in or on the housing (G) and the housing (G) can be at least in part penetrated or surrounded by the liquid (F) ;

- a photo element (FE), which is arranged on or in the laser light source (2) and with which an intensity of the laser beam (L) emitted by the laser light source (2) can be captured;

- an evaluation device (AE) for ascertaining the filling height (h) and the refractive index (n), wherein the filling height (h) can be ascertained from an optical path length of the laser beam (L) between the laser light source (2) and a container top (1a), wherein the container top (1a) is arranged above the liquid level (FS), and the refractive index (n) can be ascertained from an optical path length between the laser light source (2) and the scatter element (StE), and the optical path length can be ascertained in each case from a variation in an intensity of the laser beam (L) emitted by the laser light source (2); and

- a control device (SE), by means of which the laser light source (2) can be operated with a modulation signal.

2. Optical sensor device (10) according to Claim 1, wherein the deflection device (3) comprises a movable micromirror (MS).

3. Optical sensor device (10) according to Claim 1 or 2, which comprises a collimating element (5) with which the laser beam (L) can be collimated and be directed during a collimation at the container top (1a) or at the scatter element (StE).

4. Optical sensor device (10) according to Claim 3, which comprises a focusing element (4) with which the laser beam (L) can be focused and be directed during focusing at the scatter element (StE).

5. Optical sensor device (10) according to Claim 4, wherein the focusing element (4) is arranged in a wall of the housing (G), wherein an effective focal length of the focusing element (4) corresponds to a distance between the focusing element (4) and the scatter element (StE) .

6. Optical sensor device (10) according to either of Claims 4 and 5, wherein the focusing element (4) comprises a lens or a curved mirror.

7. Optical sensor device (10) according to any of Claims 1 to 6, which comprises an optical imaging device (6) with a variable focal length between the laser light source (2) and the deflection device (3).

8. Optical sensor device (10) according to any of Claims 1 to 7, wherein the scatter element (StE) comprises a first scatter element (StE1) and at least a second scatter element (StE2), which scatter elements can be irradiated by the deflected laser beam (L) substantially parallel to the liquid level (FS) and are shifted in a direction of the laser beam (L) travelling substantially parallel to the liquid level (FS).

9. Method for operating an optical sensor device (10) for measuring a filling height (h) and a refractive index (n) of a liquid (F) in a container (1), comprising the steps of:

- providing (S1) an optical sensor device (10) according to any of Claims 1 to 8;

- radiating (S2) a laser beam (L) into the liquid (F) using a laser light source (2), wherein the laser beam (L) is radiated in the direction of a liquid level (FS) and at a deflection device (3);

- capturing (S3) an intensity of the emitted laser beam (L) from the laser light source by way of the photo element (FE);

- ascertaining (S4) a variation in an intensity of the laser beam (L) emitted by the laser light source (2) by way of the photo element (FE) after the laser beam (L), which is scattered at the container top (1a) or at the scatter element (StE), is coupled into the light source (2) ;

- ascertaining (S5) an optical path length of the laser beam (L) between the laser light source (2) and a container top (1a), wherein the container top (1a) is arranged above the liquid level (FS), and between the laser light source (2) and the scatter element (StE) from the variation in the intensity; and

- ascertaining (S6) the filling height from the optical path length of the laser beam (L) between the laser light source (2) and the container top (1a) and ascertaining the refractive index (n) from the optical path length between the laser light source (2) and the scatter element (StE) by way of the evaluation device (AE) .

10. Method according to Claim 9, wherein the deflection device (3) is used to vary a deflection angle (UW) for the laser beam (L) and to steer the laser beam (L) at the container top (1a) or at the scatter element (StE).

11. Method according to either of Claims 9 and 10, wherein operating the laser light source (2) with a modulation signal is effected by way of the control device (SE), wherein a first modulation signal (M1) is used during the irradiation of the liquid level (FS) and a second modulation signal (M2) is used during the irradiation of the scatter element (StE).

12. Method according to Claim 11, wherein the first modulation signal (M1) and the second modulation signal (M2) comprise a current in triangular modulation, wherein the second modulation signal (M2) comprises a greater signal deviation than the first modulation signal (M1).

13. Method according to any of Claims 9 to 12, wherein a first scatter element (StE1) and at least a second scatter element (StE2) are irradiated with the laser beam (L) by way of the deflection element (3) and are shifted in a direction of the laser beam (L) travelling substantially parallel to the liquid level (FS), wherein the ascertained refractive index is verified on the basis of the optical path lengths between the light source (2) and the respective scatter element (StE1; StE2).

**Revendications**

1. Dispositif de détection optique (10) destiné à mesurer un niveau de remplissage (h) et un indice de réfraction (n) d'un liquide (F) dans un récipient (1), ledit dispositif comprenant :

    - un boîtier (G) qui peut être monté sur un fond ou une paroi latérale du récipient (1) ;
    - une source de lumière laser (2) qui est disposée dans le boîtier (G) et qui peut générer un faisceau laser (L) et le rayonner jusque dans le liquide (F) ;
    - un dispositif de déviation (3) destiné au faisceau laser (L) qui est disposé dans ou sur le boîtier (G) et qui peut rayonner le faisceau laser (L) en direction d'une surface de liquide (FS) jusque dans le liquide (F) et le dévier sensiblement parallèlement à la surface de liquide (FS) et l'orienter sur un élément de diffusion (StE) situé à l'intérieur du liquide (F), le faisceau laser (L) pouvant être rétrodiffusé par l'élément de diffusion (StE) et un couvercle de récipient (1a) au moins partiellement jusque dans la source de lumière laser (2) et être injecté par couplage dans celle-ci, l'élément de diffusion (StE) étant disposé dans ou sur le boîtier (G) et le boîtier (G) pouvant être au moins partiellement pénétré ou entouré par le liquide (F) ;
    - un photo-élément (FE), qui est disposé sur ou dans la source de lumière laser (2) et qui peut détecter une intensité du faisceau laser (L) émis par la source de lumière laser (2) ;
    - un dispositif d'évaluation (AE) destiné à déterminer le niveau de remplissage (h) et l'indice de réfraction (n), le niveau de remplissage (h) pouvant être déterminé à partir d'une longueur de trajet optique du faisceau laser (L) entre la source de lumière laser (2) et un couvercle de récipient (1a), le couvercle de récipient (1a) étant disposé au-dessus de la surface de liquide (FS), et l'indice de réfraction (n) pouvant être déterminé à partir d'une longueur de trajet optique entre la source de lumière laser (2) et l'élément de diffusion (StE) et la longueur de trajet optique pouvant être déterminée à partir d'une variation de l'intensité du faisceau laser (L) émis par la source de lumière laser (2) ; et
    - un dispositif de commande (SE) qui fait fonctionner la source de lumière laser (2) avec un signal de modulation.

2. Dispositif de détection optique (10) selon la revendication 1, dans lequel le dispositif de déviation (3) comprend un micro-miroir mobile (MS).

3. Dispositif de détection optique (10) selon la revendication 1 ou 2, qui comprend un élément de collimation (5) qui effectue une collimation du faisceau laser (L) et qui, lors d'une collimation, oriente celui-ci sur le couvercle de récipient (1a) ou l'élément de diffusion (StE).

4. Dispositif de détection optique (10) selon la revendication 3, lequel comprend un élément de focalisation (4) qui focalise le faisceau laser (L) et, lors d'une focalisation, l'oriente sur l'élément de diffusion (StE).

5. Dispositif de détection optique (10) selon la revendication 4, dans lequel l'élément de focalisation (4) est disposé dans une paroi du boîtier (G), une distance focale effective de l'élément de focalisation (4) correspondant à une distance entre l'élément de focalisation (4) et l'élément de diffusion (StE).

6. Dispositif de détection optique (10) selon l'une des revendications 4 ou 5, l'élément de focalisation (4) comprenant une lentille ou un miroir incurvé.

7. Dispositif de détection optique (10) selon l'une des revendications 1 à 6, lequel comprend un dispositif de reproduction optique (6) à focale variable entre la source de lumière laser (2) et le dispositif de déviation (3).

8. Dispositif de détection optique (10) selon l'une des revendications 1 à 7, dans lequel l'élément de diffusion (StE) comprend un premier élément de diffusion (StE1) et au moins un deuxième élément de diffusion (StE2) qui peuvent être exposés au faisceau laser dévié (L) sensiblement parallèlement à la surface de liquide (FS) et qui sont décalés dans une direction du faisceau laser (L) qui s'étend sensiblement parallèlement à la surface de liquide (FS).

9. Procédé de fonctionnement d'un dispositif de détection optique (10) destiné à mesurer un niveau de remplissage (h) et un indice de réfraction (n) d'un liquide (F) dans un récipient (1), ledit procédé comprenant les étapes suivantes :

  - fournir (S1) un dispositif de détection optique (10) selon l'une des revendications 1 à 8 ;
  - rayonner (S2) un faisceau laser (L) par le biais d'une source de lumière laser (2) jusque dans le liquide (F), le faisceau laser (L) étant émis en direction d'une surface de liquide (FS) et sur un dispositif de déviation (3) ;
  - détecter (S3) une intensité du faisceau laser (L) rayonné par la source de lumière laser à travers le photo-élément (FE) ;
  - déterminer (S4) la variation de l'intensité du faisceau laser (L) émis par la source de lumière laser (2) à travers le photo-élément (FE) après l'injection par couplage du faisceau laser (L), diffusé sur le couvercle de récipient (1a) ou l'élément de diffusion (StE), dans la source de lumière (2) ;
  - déterminer (S5) une longueur de trajet optique du faisceau laser (L) entre la source de lumière laser (2) et un couvercle de récipient (1a), le couvercle de récipient (1a) étant disposé au-dessus de la surface de liquide (FS), et entre la source de lumière laser (2) et l'élément de diffusion (StE) à partir de la variation d'intensité ; et
  - déterminer (S6) le niveau de remplissage à partir de la longueur de trajet optique du faisceau laser (L) entre la source de lumière laser (2) et le couvercle de récipient (1a) et déterminer l'indice de réfraction (n) à partir de la longueur de trajet optique entre la source de lumière laser (2) et l'élément de diffusion (StE) par le biais du dispositif d'évaluation (AE).

10. Procédé selon la revendication 9, dans lequel un angle de déviation (UW) du faisceau laser (L) est modifié à l'aide du dispositif de déviation (3) et le faisceau laser (L) est dirigé sur le couvercle de récipient (1a) ou sur l'élément de diffusion (StE).

11. Procédé selon la revendication 9 ou 10, dans lequel la source de lumière laser (2) est utilisée avec un signal de modulation par le dispositif de commande (SE), un premier signal de modulation (M1) étant utilisé lors de l'irradiation de la surface de liquide (FS) et un deuxième signal de modulation (M2) étant utilisé lors de l'irradiation de l'élément de diffusion (StE) .

12. Procédé selon la revendication 11, dans lequel le premier signal de modulation (M1) et le deuxième signal de modulation (M2) comprennent un courant en modulation triangulaire, le deuxième signal de modulation (M2) comprenant une excursion de signal plus importante que le premier signal de modulation (M1).

13. Procédé selon l'une des revendications 9 à 12, dans lequel un premier élément de diffusion (StE1) et au moins un deuxième élément de diffusion (StE2) sont irradiés avec le faisceau laser (L) par l'élément de déviation (3), lesquels sont décalés en direction du faisceau laser (L) qui s'étend sensiblement parallèlement à la surface de liquide (FS), une vérification de l'indice de réfraction déterminé étant effectuée à partir des longueurs de trajet optique entre la source de lumière (2) et chaque élément de diffusion (StE1 ; StE2).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1929279 B1

- EP 2770308 A1